# EUROPÄISCHE PATENTSCHRIFT

(11) **EP 3 250 653 B1**
(45) Veröffentlichungstag und Bekanntmachung des Hinweises auf die Patenterteilung: **24.10.2018**
(21) Anmeldenummer: 16790611.4
(22) Anmeldetag: 03.11.2016
(51) Int. Cl.: C09D 183/04, D06M 15/643, C08L 83/04

(54) **VERFAHREN ZUR IMPRÄGNIERUNG VON TEXTILIEN MIT ZUSAMMENSETZUNGEN ENTHALTEND ALKOXYPOLYSILOXANE**
METHOD FOR IMPREGNATING TEXTILES WITH COMPOSITIONS CONTAINING ALKOXYPOLYSILOXANE
PROCÉDÉ D'IMPRÉGNATION DE TEXTILES AVEC DES COMPOSITIONS CONTENANT DES ALCOXYPOLYSILOXANES

(30) Priorität: 10.11.2015 DE 102015222139
(43) Veröffentlichungstag der Anmeldung: 06.12.2017
(73) Patentinhaber: Wacker Chemie AG, 81737 München (DE)
(72) Erfinder: RAUTSCHEK, Holger, 01612 Nünchritz (DE); HELLER, Anton, 84359 Simbach (DE); ZICHE, Wolfgang, 84489 Burghausen (DE)
(74) Vertreter: Deffner-Lehner, Maria
(86) Internationale Anmeldenummer: PCT/EP2016/076483
(87) Internationale Veröffentlichungsnummer: WO 2017/080894

(56) Entgegenhaltungen:
- WO-A2-2014/099497
- GB-A- 766 864
- US-A- 4 987 155
- US-A- 5 216 037
- US-A1- 2003 155 547

## Beschreibung

Die Erfindung betrifft Verfahren zur Imprägnierung von Textilien mit Zusammensetzungen enthaltend Alkoxypolysiloxane und längere Alkylreste aufweisende Alkoxypolysiloxane.

Textilien werden in unterschiedlichen Bereichen angewandt, als technische Textilien, für Zelte und Markisen und insbesondere für Bekleidung. Bei Textilien, die der Witterung ausgesetzt werden, z. B. bei Regenbekleidung, ist es erforderlich, dass diese wasserundurchlässig sind und auch kein Wasser aufnehmen. Bei Bekleidung ist es insbesondere wünschenswert, dass die Textilien trotz Wasserabweisung hinreichend atmungsaktiv bleiben, also nicht mit einem geschlossenen Polymerfilm versiegelt werden.

Zur Hydrophobierung können Mischungen aus Paraffin mit Zirkonseifen eingesetzt werden. Diese bewirken einen sehr hohen Kontaktwinkel, allerdings wird die Wirkung nach dem Waschen oder nach der chemischen Reinigung deutlich schlechter (Odvarka, J., Dembicky, J., Wiener, J., Kovacic, V., Textile Faculty, Technical University of Liberec, Liberec, Czech Rep., Vlakna a Textil, 9(2), 58-69, 2002). Emulsionen aus Siloxanen mit Si-H Gruppen sind da von Vorteil (Ramaszeder, K., Textilveredlung 1995, 30 (11/12), 256-62). Diese Siloxane haben jedoch den Nachteil, dass sie bei der Anwendung Wasserstoff abspalten, was ein Sicherheitsrisiko darstellt.

Deshalb haben sich in den letzten Jahrzehnten Fluorcarbone als Hydrophobiermittel durchgesetzt (z. B. US 4,070,152 A, EP 1 687 359 B1). Diese Produkte sind aber aus Gründen des Umweltschutzes bedenklich, da einige Rohstoffe und Abbauprodukte dauerhaft in der Umwelt verbleiben können.

Aufgrund dieser Umweltbedenken und der hohen Kosten sind auch Formulierungen mit fluorhaltige Silanen und Siloxanen (z. B. EP 1 217 119 B1 und WO 04/018758 A2) nicht attraktiv.
Die Anwendung von hydrolysierbaren Silanen ist technologisch zu aufwändig, um breite Anwendung zu finden (z. B. US 2009/0206296 A1). US 2003/155547 A1 offenbart eine Zusammensetzung enthaltend ein mit Alkoxykettengruppen und OH- oder OR-Endgruppen substituiertes Polysiloxan in Zusammenhang mit einem Polyurethan. Die Zusammensetzung findet Anwendung zur Behandlung von Wollfasern. Es bestand daher die Aufgabe, ein Verfahren zur Imprägnierung von Textilien bereitzustellen mit Zusammensetzungen enthaltend Organopolysiloxane, die eine hervorragende und dauerhafte wasserabweisende Imprägnierung unterschiedlicher Textilien bei Erhalt der Atmungsaktivität ermöglichen, bei der Anwendung keinen Wasserstoff abspalten und umweltfreundlich sind.
Die Aufgabe wird durch die Erfindung gelöst.
Gegenstand der Erfindung ist ein Verfahren zur Imprägnierung von Textilien mit Zusammensetzungen enthaltend Alkoxypolysiloxane (A) der Formel

R¹₃SiO[SiR¹(OR²)O]ₓ[SiR¹₂O]_{y}[SiR¹R³O]_{z}SiR¹₃ (I)

wobei
- R¹: gleich oder verschieden ist und einen ggf. substituierten C₁-₇-Kohlenwasserstoffrest bedeutet,
- R²: gleich oder verschieden ist und ein Wasserstoffatom oder einen C₁-C₆-Kohlenwasserstoffrest bedeutet,
- R³: gleich oder verschieden ist und einen C₈-C₃₀-Kohlenwasserstoffrest bedeutet,
- x: eine ganze Zahl von mindestens 1, vorzugsweise mindestens 5, bevorzugt mindestens 10, und
höchstens 1 000, vorzugsweise höchstens 100, bevorzugt höchstens 50, ist,
- y: eine ganze Zahl von mindestens 0 und höchstens 100, vorzugsweise höchstens 50, bevorzugt höchstens 10, ist,
- z: eine ganze Zahl von mindestens 0, vorzugsweise mindestens 5, bevorzugt mindestens 10, und
höchstens 1 000, vorzugsweise höchstens 100, bevorzugt höchstens 50, ist,
mit der Maßgabe, dass
- x: Einheiten [SiR¹(OR²)O] in Mengen von
mindestens 10 Mol-%, vorzugsweise mindestens 30 Mol-%, und höchstens 100 Mol-%, vorzugsweise höchstens 70 Mol-%,
- y: Einheiten [SiR¹₂O] in Mengen von
mindestens 0 Mol-% und höchstens 90 Mol-%, vorzugsweise höchstens 50 Mol-%, und
- z: Einheiten [SiR¹R³O] in Mengen von
mindestens 0 Mol-%, vorzugsweise mindestens 20 Mol-%, und höchstens 90 Mol-%, vorzugsweise höchstens 70 Mol-%,
jeweils bezogen auf die Summe der Siloxaneinheiten x+y+z, enthalten sind.

Vorzugsweise werden als Alkoxypolysiloxane (A) solche der Formel (I) eingesetzt, bei denen y den Wert 0 und z eine ganze Zahl von mindestens 1 ist.

Bevorzugt werden als Alkoxypolysiloxane (A) daher solche der Formel

R¹₃SiO[SiR¹(OR²)O]_{x'}[SiR¹R³O]_{z'}SiR¹₃ (II)

eingesetzt, wobei
- R¹, R² und R³: die oben dafür angegebene Bedeutung haben,
- x': eine ganze Zahl von mindestens 1, vorzugsweise mindestens 5, bevorzugt mindestens 10, und
höchstens 1 000, vorzugsweise höchstens 100, bevorzugt höchstens 50, ist,
- z': eine ganze Zahl von mindestens 1, vorzugsweise mindestens 5, bevorzugt mindestens 10, und
höchstens 1 000, vorzugsweise höchstens 100, bevorzugt höchstens 50, ist,
mit der Maßgabe, dass
- x': Einheiten [SiR¹(OR²)O] in Mengen von
mindestens 10 Mol-%, vorzugsweise mindestens 20 Mol-%, bevorzugt mindestens 30 Mol-%, und
höchstens 95 Mol-%, vorzugsweise höchstens 80 Mol-%, bevorzugt höchstens 70 Mol-%,
- z': Einheiten [SiR¹R³O] in Mengen von
mindestens 5 Mol-%, vorzugsweise mindestens 20 Mol-%, bevorzugt mindestens 30 Mol-%, und
höchstens 90 Mol-%, vorzugsweise höchstens 80 Mol-%, bevorzugt höchstens 70 Mol-%,
jeweils bezogen auf die Summe der Siloxaneinheiten x'+z'. enthalten sind.

Gegenstand der Erfindung sind daher Zusammensetzungen enthaltend Alkoxypolysiloxane (A) der Formel

R¹₃SiO[SiR¹(OR²)O]_{x'}[SiR¹R³O]_{z'}SiR¹₃ (II)

wobei,
- R¹, R² und R³: die oben dafür angegebene Bedeutung haben,
- x': eine ganze Zahl von mindestens 1, vorzugsweise mindestens 5, bevorzugt mindestens 10, und höchstens 1 000, vorzugsweise höchstens 100, bevorzugt höchstens 50, ist,
- z': eine ganze Zahl von mindestens 1, vorzugsweise mindestens 5, bevorzugt mindestens 10, und höchstens 1 000, vorzugsweise höchstens 100, bevorzugt höchstens 50, ist,
mit der Maßgabe, dass
- x': Einheiten [SiR¹(OR²)O] in Mengen von
mindestens 10 Mol-%, vorzugsweise mindestens 20 Mol-%, bevorzugt mindestens 30 Mol-%, und höchstens 95 Mol-%, vorzugsweise höchstens 80 Mol-%, bevorzugt höchstens 70 Mol-%,
- z': Einheiten [SiR¹R³O] in Mengen von
mindestens 5 Mol-%, vorzugsweise mindestens 20 Mol-%, bevorzugt mindestens 30 Mol-%, und höchstens 90 Mol-%, vorzugsweise höchstens 80 Mol-%, bevorzugt höchstens 70 Mol-%,
jeweils bezogen auf die Summe der Siloxaneinheiten x'+z'.

Die Alkoxypolysiloxane (A) der Formeln (I) und (II) können bis zu 10 Mol-%, vorzugsweise bis zu 5 Mol-%, Einheiten der Formel RSiO_{3/2} und bis zu 10 Mol-%, vorzugsweise bis zu 5 Mol-%, endständige Siloxaneinheiten mit Si-gebunden Gruppen der Formel -O-R² aufweisen, wobei R¹ und R² die oben dafür angegebene Bedeutung haben. Diese Siloxaneinheiten werden bei der Herstellung der Alkoxypolysiloxane (A) durch unerwünschte aber nur begrenzt vermeidbare Nebenreaktionen gebildet.

Als Alkoxypolysiloxan (A) kann ein Alkoxypolysiloxan oder eine Mischung aus mehreren Alkoxypolysiloxanen verwendet werden.

Alkoxypolysiloxan bzw. die Mischung aus Alkoxypolysiloxanen (A) ist vorzugsweise bei 25°C flüssig und weist vorzugsweise Viskositäten von 10 bis 100 000 mPa·s (25°C), besonders bevorzugt von 100 bis 10 000 mPa·s (25°C), auf oder es sind feste Substanzen mit einem Schmelzpunkt von vorzugsweise 30-100°C, besonders bevorzugt 30-70°C.

Beispiele für Kohlenwasserstoffreste R¹ mit 1 bis 7 C-Atomen sind Alkylreste, wie der Methyl-, Ethyl-, n-Propyl-, isoPropyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenylrest; Alkarylreste, wie o-, m-, p-Tolylreste; und Aralkylreste, wie der Benzylrest.

Beispiele für substituierte Reste R¹ sind mit Halogen-, Cyano-, Glycidoxy-, Polyalkylenglycol- oder Aminogruppen substituierte Reste, wie beispielsweise Trifluorpropyl-, Cyanoethyl-, Glycidoxypropyl-, Polyalkylenglycolpropyl-, und Aminogruppen tragende Kohlenwasserstoffreste.

Vorzugsweise handelt es sich beim Rest R¹ um Kohlenwasserstoffreste mit 1 bis 4 Kohlenstoffatomen oder um einen Phenylrest, bevorzugt um C₁-C₄-Alkylreste oder um einen Phenylrest, besonders bevorzugt um einen Methylrest.

Beispiele für Reste R² sind ein Wasserstoffatom und Alkylreste mit 1-6 Kohlenstoffatomen, vorzugsweise mit 2-4 Kohlenstoffatomen.

Bevorzugt sind als Reste R³ Kohlenwasserstoffreste mit 10 bis 20 Kohlenstoffatomen.
Beispiele für Reste R³ sind Alkylreste mit 12 bis 18 Kohlenstoffatomen, wie i-Dodecyl-, n-Dodecyl-, n-Tetradecyl-, n-Hexadecyl- und n-Octadecylreste.

Die Herstellung der Alkoxypolysiloxane (A) erfolgt nach bekannten Verfahren, wie sie z. B. in US 2003/0180624 A, JP 2004067561 A, WO 2014/099497 A2 oder in Titvinidze et al., Oxidation Communications 37 (2014), 372 beschrieben sind.

Die erfindungsgemäßen Zusammensetzungen können neben den Alkoxypolysiloxanen (A) weitere Bestandteile enthalten. Bespiele für weitere Bestandteile sind Emulgatoren (B), Wasser (C), Katalysatoren (D), organische Lösungsmittel (E) und weitere Komponenten (F).

Als Katalysatoren (D) können alle bekannten Katalysatoren, die die Hydrolyse und/oder Kondensation von Alkoxysiloxanen fördern, verwendet werden, vorzugsweise Alkalihydroxide, Amine, Guanidine und Verbindungen von Zinn, Zink, Zirkonium oder Titan.

Katalysatoren (D) werden vorzugsweise in einer Menge von 0,01 bis 1 Teilen je 100 Teile Alkoxypolysiloxane (A) eingesetzt. Vorzugsweise werden die Katalysatoren erst bei der Anwendung zugesetzt.

In einer Ausführungsform der Erfindung sind die erfindungsgemäßen Alkoxypolysiloxane (A) in organischen Lösungsmitteln (E) gelöst. Die Lösungen können Katalysatoren (D) enthalten.

Typische Beispiele für organische Lösungsmittel (E) für die erfindungsgemäß verwendeten Alkoxypolysiloxane (A) sind Kohlenwasserstoffe, wie Pentan, n-Hexan, Hexan-Isomerengemische, Heptan, Oktan, Testbenzin, Petrolether, Benzol, Toluol und Xylole; halogenierte Kohlenwasserstoffe, wie Dichlormethan, Trichlormethan, Tetrachlormethan, 1,2-Dichlorethan und Trichlorethylen; Alkohole, wie Methanol, Ethanol, n-Propanol, iso-Propanol, n-Amylalkohol und i-Amylalkohol; Ketone, wie Aceton, Methylethylketon, Diisopropylketon und Methylisobutylketon (MIBK); Ester, wie Ethylacetat, Butylacetat, Propylpropionat, Ethylbutyrat und Ethylisobutyrat; Ether, wie Tetrahydrofuran, Diethylether, Di-isopropylether und Diethylenglycoldimethylether; oder Gemische dieser Lösungsmittel.

Wenn organische Lösungsmittel (E) eingesetzt werden, werden sie vorzugsweise in einer Menge von 100 bis 10000 Gewichtsteilen je 100 Gewichtsteile Alkoxypolysiloxane (A) eingesetzt.

In einer weiteren Ausführungsform der Erfindung sind die erfindungsgemäßen Zusammensetzungen wässrige Emulsionen, die erfindungsgemäße Alkoxypolysiloxane (A), Emulgatoren (B) und Wasser (C) enthalten.

Emulgatoren (B) werden in Mengen von vorzugsweise 1 bis 60 Gewichtsteilen, bevorzugt 2 bis 30 Gewichtsteilen, jeweils bezogen auf 100 Gewichtsteile Alkoxypolysiloxane (A) eingesetzt.

Es können im erfindungsgemäßen Verfahren alle bekannten Arten von Emulgatoren eingesetzt werden. Das sind z. B. anionische, kationische, nichtionogene und amphotere Emulgatoren, Schutzkolloide und Partikel, die Emulsionen stabilisieren.

Bei dem Bestandteil (B) der Emulsionen handelt es sich vorzugsweise um kommerziell verfügbare Emulgatoren, wie z. B. Sorbitanester von Fettsäuren mit 10 bis 22 Kohlenstoffatomen; Polyoxyethylensorbitanestern von Fettsäuren mit 10 bis 22 Kohlenstoffatomen und bis zu 35 Prozent Ethylenoxidgehalt; Polyoxyethylensorbitolestern von Fettsäuren mit 10 bis 22 Kohlenstoffatomen; Polyoxyethylenderivate von Phenolen mit 6 bis 20 Kohlenstoffatomen am Aromaten und bis zu 95 Prozent Ethylenoxidgehalt; Fettamino- und Amidobetaine mit 10 bis 22 Kohlenstoffatomen; Polyoxyethylenkondensate von Fettsäuren oder Fettalkoholen mit 8 bis 22 Kohlenstoffatomen mit bis zu 95 Prozent Ethylenoxidgehalt; ionische Emulgatoren, wie Alkylarylsulfonate mit 6 bis 20 Kohlenstoffatomen in der Alkylgruppe; Fettsäureseifen mit 8 bis 22 Kohlenstoffatomen; Fettsulfate mit 8 bis 22 Kohlenstoffatome; Alkylsulfonate mit 10 bis 22 Kohlenstoffatomen; Alkalimetallsalze von Dialkylsulfosuccinaten; Fettaminoxide mit 10 bis 22 Kohlenstoffatomen; Fettimidazoline mit 6 bis 20 Kohlenstoffatomen; Fettamidosulfobetaine mit 10 bis 22 Kohlenstoffatomen; quarternäre Emulgatoren, wie Fettammoniumverbindungen mit 10 bis 22 Kohlenstoffatomen; Fettmorpholinoxide mit 10 bis 22 Kohlenstoffatomen; Alkalimetallsalze von carboxylierten, ethoxylierten Alkoholen mit 10 bis 22 Kohlenstoffatomen und bis zu 95 Prozent Ethylenoxid; Ethylenoxidkondensate von Fettsäuremonoestern des Glycerins mit 10 bis 22 Kohlenstoffatomen und bis zu 95 Prozent Ethylenoxid; Mono- oder Diethanolamide von Fettsäuren mit 10 bis 22 Kohlenstoffatomen; alkoxylierte Silicon-Emulgatoren mit Ethylenoxid- und oder Propylenoxideinheiten; Alkylphosphate und deren Salze.

Wie auf dem Gebiet der Emulgatoren wohl bekannt, können die Gegenionen im Falle von anionischen Emulgatoren Alkalimetallionen, Ammoniumionen des Ammoniaks oder substituierter Amine, wie Trimethylamin oder Triethanolamin, sein. Normalerweise sind Ammonium-, Natrium- und Kaliumionen bevorzugt. Im Falle von kationischen Emulgatoren ist das Gegenion ein Halogenid, Sulfat oder Methylsulfat. Chloride sind die zumeist industriell verfügbaren Verbindungen.

Beispiele für Emulgatoren sind Decylaminobetain; Cocoamidsulfobetain; Oleylamidobetain; Cocoimidazolin; Cocosulfoimidazolin; Cetylimidazolin; 1-Hydroxyethyl-2-heptadecenyl-imidazolin; n-Cocomorpholinoxid; Decyldimethylaminoxid; Cocoamidodimethylaminoxid; Sorbitantristearat mit kondensierten Ethylenoxidgruppen; Sorbitantrioleat mit kondensierten Ethylenoxidgruppen; Natrium- oder Kaliumdodecylsulfat; Natrium- oder Kaliumstearylsulfat; Natrium- oder Kaliumdodecylbenzolsulfonat; Natrium- oder Kaliumstearylsulfonat; Triethanolaminsalz des Dodecylsulfates; Trimethyldodecylammoniumchlorid; Trimethylstearylammoniummethosulfat; Natriumlaurat; Natrium- oder Kaliummyristat, Di-n-butylphosphat, Di-n-hexylphosphat, Mono-n-octylphosphat, Di-n-octylphosphat, Mono-2-ethylhexylphos¬phat, Di-2-ethylhexylphosphat, Mono-i-nonylphosphat, Di-i-nonylphosphat, Mono-n-decylphosphat, n-Octyl-n-Decylphosphat, Di-n-decylphosphat, Monoisotridecylphosphat, Di-n-nonylphenylphosphat, Monooleylphosphat und Distearylphosphat, Mono-n octylphosphat, Di-n-octyl¬phosphat, Mono-n-decylphosphat, n-Octyl-n-decylphosphat, Di-n-decylphosphat, ethoxyliertes Rizinusöl mit 200 Ethylenglycoleinheiten, ethoxyliertes Rizinusöl mit 40 Ethylenglycoleinheiten und ethoxyliertes hydriertes Rizinusöl mit 200 Ethylenglycoleinheiten, Polyoxyethylen(20)Sorbitanstearat (Polysorbat 60), Polyoxyethylen(20)Sorbitantristearat (Polysorbat 65), Polyoxyethylen(20)Sorbitanoleat (Polysorbat 80) und Polyoxyethylen(20)Sorbitanlaurat (Polysorbat 20), Verbindungen der Formel i-C₁₃H₂₇-O-(CH₂CH₂O)₁₀-H, C₁₆H₃₃-O-(CH₂CH₂O)₄-H, C₆H₃₃-O-(CH₂CH₂O)₂₀-H, C₁₆H₃₃-O-(CH₂CH₂O)₂₅-H, C₁₈H₃₇-O- (CH₂CH₂O)₄-H, C₁₈H₃₇-O-(CH₂CH₂O)₂₀-H, C₁₈H₃₇-O-(CH₂CH₂O)₂₅-H, C₁₈H₃₅-O-(CH₂CH₂O)₂₀-H, C₁₂H₂₃-O-(CH₂CH₂O)₄-H, C₁₂H₂₃-O-(CH₂CH₂O)₂₃-H, C₁₆H₃₃-CH₂-C(O)-O-(CH₂CH₂O)₂₀-H, C₁₆H₃₃-CH₂-C(O)-O-(CH₂CH₂O)₃₀-H, C₁₆H₃₃-CH₂-C(O)-O-(CH₂CH₂O)₄₀-H und C₁₆H₃₃-CH₂-C(O)-O-(CH₂CH₂O)₁₀₀-H.

Der Bestandteil (B) kann aus einem Emulgator oder aus einem Gemisch zweier oder mehrerer Emulgatoren bestehen.

In einer bevorzugten Ausführungsform besteht Komponente (B) zu mehr als 50 Gew.-%, besonders bevorzugt zu mehr als 75 Gew.-% aus nicht-ionischen Emulgatoren.

Vorzugsweise haben die in den erfindungsgemäßen Emulsionen enthaltenen nicht-ionischen Emulgatoren (B) einen durchschnittlichen HLB-Wert von 10 bis 17, bevorzugt 11 bis 15.

Der HLB-Wert ist Ausdruck des Gleichgewichts zwischen hydrophilen und hydrophoben Gruppen eines Emulgators. Die Definition des HLB-Werts sowie Verfahren zu deren Ermittlung sind dem Fachmann bekannt und z. B. in Journal of Colloid and Interface Science 298 (2006), 441-450 sowie der dort zitierten Literatur, insbesondere Zitat [23], beschrieben.

Als emulgierende Schutzkolloide können z. B. Polyvinylalkohole sowie Celluloseether, wie Methylcellulose, Hydroxyethylcellulose und Carboxymethcellulose, eingesetzt werden.

Als Partikel zur Stabilisierung von Emulsionen eignen sich beispielsweise partiell hydrophobierte hochdisperse Kieselsäuren.

Zusätzlich zu den Komponenten (A), (B), (C), (D) und (E) können alle weiteren Stoffe (F), die üblicherweise Siliconemulsionen zugesetzt werden, eingesetzt werden, wie z. B. weitere Siloxane, die verschieden sind zu Alkoxypolysiloxanen (A), z.B. Polyethersiloxane, Silane, insbesondere Alkoxysilane, Verdicker und/oder Schutzkolloide, Füllstoffe sowie Additive, wie beispielsweise Konservierungsmittel, Desinfektionsmittel, Netzmittel, Korrosionsinhibitoren, Farbstoffe und Duftstoffe.

Falls bei dem erfindungsgemäßen Verfahren zusätzlich zum Emulgator (B) als Komponente (F) Verdicker bzw. Schutzkolloide eingesetzt werden, handelt es sich bevorzugt um Acrylsäure-copolymere, Celluloseether und Polysacharide, wie z. B. Xanthan Gum.

Falls Verdicker und/oder Schutzkolloide (F) eingesetzt werden, handelt es sich um Mengen von bevorzugt 0,01 bis 2 Gewichtsteilen, bezogen auf 100 Gewichtsteile Alkoxypolysiloxane (A).

Beispiele für Additive (F), die erfindungsgemäß eingesetzt werden können, sind z. B. dem Fachmann bekannte Konservierungsmittel, Farb- oder Duftstoffe, insbesondere Konservierungsmittel, wie Methylisothiazolinon, Chlormethylisothiazolinon, Benzylisothiazolinon, Phenoxyethanol, Methylparaben, Ethylparaben, Propylparaben, Butylparaben, Isobutylparaben, Alkalibenzoate, Alkalisorbate, Iodopropynylbutylcarbamat, Benzylalkohol und 2-Brom-2-nitropropan-1,3-diol.

Falls Additive (F) eingesetzt werden, handelt es sich um Mengen von bevorzugt 0,0005 bis 2 Gewichtsteilen, bezogen auf 100 Gewichtsteile Alkoxypolysiloxane (A). Im erfindungsgemäßen Verfahren werden bevorzugt Additive (F), insbesondere Konservierungsmittel, eingesetzt.

Die erfindungsgemäßen Emulsionen haben einen Gehalt an nichtflüchtigen Anteilen gemessen nach DIN EN ISO 3251 von bevorzugt 1 bis 80 Gew.-%, besonders bevorzugt von 30 bis 70 Gew.-%.

Der pH-Wert der erfindungsgemäßen Emulsionen beträgt vorzugsweise 3 bis 10, besonders bevorzugt 6 bis 8.

Als Wasser (C) können alle Arten von Wässern eingesetzt werden, die auch bisher zur Herstellung von Emulsionen eingesetzt wurden.

Als Wasser (C) wird vorzugsweise teil- oder vollentsalztes Wasser, destilliertes oder (mehrfach) redestilliertes Wasser, Wässer für medizinische oder pharmazeutische Zwecke, wie z. B. gereinigtes Wasser (Aqua purificata gemäß Pharm. Eur.) eingesetzt.

Das erfindungsgemäß eingesetzte Wasser (C) hat vorzugsweise eine Leitfähigkeit von weniger als 50 µS/cm, bevorzugt weniger als 10 µS/cm, besonders bevorzugt weniger als 1,3 µS/cm, jeweils bei 25°C und 1010 hPa.

Als Misch- und Homogenisierwerkzeuge, die eingesetzt werden können, um die erfindungsgemäßen Zusammensetzungen in Form einer wässrigen Emulsion herzustellen, sind alle dem Fachmann bekannten Emulgiergeräte, wie beispielsweise schnelllaufende Rührer, Dissolverscheiben, Rotor-Stator-Homogenisatoren, Ultraschallhomogenisatoren und Hochdruckhomogenisatoren verschiedenster Bauart, geeignet. Wenn große Teilchen gewünscht sind, sind auch langsam laufende Rührer geeignet.

Die Herstellung der erfindungsgemäßen Zusammensetzungen in Form einer wässrigen Emulsion kann kontinuierlich, semikontinuierlich oder diskontinuierlich betrieben werden.

Zur Herstellung der erfindungsgemäßen Zusammensetzungen in Form einer wässrigen Emulsion können alle Komponenten durch Rühren und/oder Homogenisieren, z. B. in beliebiger Reihenfolge, miteinander vermischt werden, wobei die Umfangsgeschwindigkeit des Rührers und/oder Rotor-Stator Homogenisators vorzugsweise größer 5 m/s, bevorzugt größer 10 m/s, ist und insbesondere 5 bis 50 m/s beträgt.

Vorzugsweise werden die erfindungsgemäßen Zusammensetzungen in Form wässriger Emulsionen aus Komponenten (A), (B), (C) und gegebenenfalls (F) so hergestellt, dass erst ein Teil der Komponente (C) mit den übrigen Komponenten vermischt wird und eine hochviskose und nicht fließfähige Paste entsteht. Besonders bevorzugt ist es, wenn die Fließgrenze (entsprechend DIN 53019-1 und dort zitierten Normen) dieser pastösen Vormischung größer als 100 Pa (25°C), insbesondere größer als 1000 Pa (25°C), ist. Vorzugsweise wird diese pastöse Vormischung dann unter Einwirkung von Scherenergie homogenisiert bis die gewünschte Teilchengröße erreicht wird und mit Wasser (C) unter Rühren und/oder Homogenisieren verdünnt, so dass eine fließfähige Emulsion gebildet wird. Vorzugsweise enthält die erfindungsgemäße Emulsion mehr als 50 Gewichtsteile, bevorzugt 50 bis 1000 Gewichtsteile, besonders bevorzugt 80 bis 500 Gewichtsteile, Wasser (C), jeweils bezogen auf 100 Gewichtsteile Komponente (A).

Beispiele für Textilien sind natürliche oder synthetisch hergestellte Fasern, Garne, Vliese, Matten, Stränge, gewebte, geknüpfte, gewirkte oder gestrickte Textilien. Die Textilien können in Form von Einzelfasern, Faserbündeln, Füllfasern, Garnen, Teppichen, Stoffbahnen oder Kleidungsstücken oder Teilen von Kleidungsstücken vorliegen.
Die Textilien können aus Baumwolle, Wolle, Mischpolymeren von Vinylacetat, Rayon, Hanf, natürlicher Seide, Polypropylen, Polyethylen, Polyester, Polyurethan, Polyamid, Aramid, Polyimid, Polyacrylat, Polyacrylnitril, Polylactid, Polyvinylchlorid, Glasfasern, Keramikfasern, Cellulose oder deren Gemische bestehen.

Das Auftragen auf die zu behandelnden Textilien kann in beliebiger für die Behandlung von Textilien geeigneter und vielfach bekannter Weise, z.B. durch Tauchen, Streichen, Gießen, Sprühen, Aufwalzen, Klotzen, Drucken oder Schaumauftrag erfolgen.

Die behandelten Textilien werden vorzugsweise bei Temperaturen von 10°C bis 250°C, bevorzugt 25 bis 200°C, besonders bevorzugt 80°C bis 180°C, trocknen gelassen.
Hierbei erfolgen die Kondensation der erfindungsgemäßen Alkoxypolysiloxane und eine Imprägnierung der behandelten Textilien, wobei sie wasserabweisend gemacht werden.

Die erfindungsgemäßen Alkoxypolysiloxane haben den Vorteil, dass sie eine sehr gute wasserabweisende Ausrüstung unterschiedlicher Textilien ermöglichen.

Die erfindungsgemäßen Alkoxypolysiloxane haben den Vorteil, dass die wasserabweisende Ausrüstung eine sehr gute Waschpermanenz aufweist.

Die erfindungsgemäßen Alkoxypolysiloxane haben den Vorteil, dass sie einfach und sicher verarbeitbar sind.

Die erfindungsgemäßen Alkoxypolysiloxane haben den Vorteil, dass sie ohne Stoffe hergestellt werden können, die dauerhaft die Umwelt belasten.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1010 hPa, und bei Raumtemperatur, also etwa 25°C bzw. einer Temperatur, die sich beim Zusammengeben der Reaktanten bei Raumtemperatur ohne zusätzliche Heizung oder Kühlung einstellt, durchgeführt. Alle in den Beispielen angeführten Viskositätsangaben beziehen sich auf eine Temperatur von 25°C.

Zur Bestimmung der Struktur wurden ²⁹Si-NMR Spektren der Alkoxypolysiloxane in CDCl₃ mit 0,1 mol/1 Cr(acac)₃ aufgenommen (AVANCE 400 Fa. Bruker, 10 mm selektiver ²⁹Si NMR-Probenkopf, Pulswinkel 90°, Wartezeit 15 s, 400 scans).

Die in den nachfolgenden Beispielen hergestellten Emulsionen wurden wie folgt geprüft:
Die Teilchengröße wurde mit einem Malvern Mastersizer 2000 (Malvern Instruments GmbH D-Herrenberg; Messprinzip: Fraunhoferbeugung entsprechend ISO 13320) durchgeführt. Als Parameter für die Messung wird ein sphärisches Modell angenommen mit einem Brechungsindex der kontinuierlichen Phase von 1,33, einem Brechungsindex der dispersen Phase von 1,39 und einer Absorption von 0,01.

Die Messung des pH-Wertes erfolgte entsprechend der US Pharmacopeia USP 33 bei 20°C.

Die Hydrophobie der behandelten Textilien wird mittels Spraytest gemäß AATCC Testmethode Nr. 22-2005 geprüft. Dabei werden die Textilen mit entionisiertem Wasser besprenkelt. Das Ergebnis, das aus dem Vergleich der besprenkelten Textil-Oberfläche mit den Rating-Bildern in der Methodenbeschreibung resultiert, gibt in etwa an, wieviel % der Fläche unbenetzt geblieben ist.

### Herstellungsbeispiel 1

20 g eines Polyorganosiloxans der Formel

(CH₃)₃-Si-O-[SiH(CH₃)-O]₅₀-Si(CH₃)₃

wird zusammen mit 20 g Toluol und 15,2 g Ethanol auf 70°C erwärmt und innerhalb von 5 min mit einer toluolischen Lösung von 0,174 g Perfluortriphenylboran B(C₆F₅)₃ versetzt. Innerhalb von 3 h steigt die Temperatur auf 100°C an, wobei ab 90°C verstärkt Wasserstoff gebildet wird. Es wird 30 min nachgerührt. Die Mischung wird bei 1-2 mbar bis 140°C Sumpftemperatur ausgeheizt. Es werden 70 g eines farblosen Produkts der Formel (CH₃)₃-Si-O-[Si(CH₃)OEt-O]₅₀-Si(CH₃)₃ (NMR-Analyse) erhalten.

### Herstellungsbeispiel 2

Das Verfahren nach Beispiel 1 wird wiederholt, als Ausgangsprodukt wird aber ein Polyorganosiloxan der Formel

(CH₃)₃-Si-O-[SiH(CH₃)-O]₄₇-[Si(CH₃)₂-O]₁₃-Si(CH₃)₃

eingesetzt.
Das erhaltene Produkt hatte laut NMR-Analyse die Formel (CH₃)₃-Si-O-[Si(CH₃)OEt-O]₄₇-[Si(CH₃)₂-O]₁₃-Si(CH₃)₃

### Herstellungsbeispiel 3

50g eines Siloxan der Formel (CH₃)₃-Si-O-[Si(CH₃)H-O]₅₄-Si(CH₃)₃ und 0,18g Karstedt-Katalysator (1%Pt) wurden auf 80°C erhitzt. 101g Octadecen wurden innerhalb von 1h langsam zugegeben wobei die Temperatur auf 120°C anstieg. Nach abkühlen auf 80°C wurden innerhalb von 75 min 30g Ethanol zugegeben wobei eine starke Gas- und Schaumentwicklung beobachtet wurde. Es wurde 2h bei 80°C nachgerührt. Anschließend wurden flüchtige Bestandteile bei 100°C und 10 mbar am Rotationsverdampfer entfernt. Beim Abkühlen wurde das Produkt fest und konnte bei 47°C wieder aufgeschmolzen werden.
Laut NMR-Analyse bestand das Produkt aus folgenden Anteilen unterschiedlicher Siloxaneinheiten:

| | |
|---|---|
| (CH₃)₃-Si-O_{1/2} | 3,4 mol % |
| C₂H₅O(CH₃)₂-Si-O_{1/2} | 3,0 mol % |
| SiH(CH₃)-O_{2/2} | 0,6 mol % |
| Si(CH₃)(C₁₈H₃₇)-O_{2/2} | 38,8 mol % |
| Si(CH₃)(OC₂H₅)-O_{2/2} | 48,7 mol % |
| CH₃-Si-O_{3/2} | 5,5 mol % |

### Herstellungsbeispiel 4

50g eines Siloxan der Formel (CH₃)₃-Si-O-[Si(CH₃)H-O]₅₄-Si(CH₃)₃ und 0,18g Karstedt-Katalysator (1%Pt) wurden auf 40°C erhitzt. 14g Methanol wurden in 60 min zugegeben und die Reaktionsmischung wurde weitere 2h bei 80°C gerührt. Anschließend wurden 101g Octadecen werden innerhalb von 1h langsam zugegeben wobei die Temperatur auf 115°C anstieg. Es wurde 2h bei 80°C nachgerührt. Nach Zugabe von 0,18g Katalysator und 14g Methanol wurde 2h bei 80°C nachgerührt, anschließend wurden noch einmal 0,18g Katalysator und 20g Octadecen zugegeben und weitere 2h bei 80°C gerührt. Anschließend wurden flüchtige Bestandteile bei 100°C und 10 mbar am Rotationsverdampfer entfernt. Beim Abkühlen wurde das Produkt fest und konnte bei 58°C wieder aufgeschmolzen werden.

Laut NMR-Analyse bestand das Produkt aus folgenden Anteilen unterschiedlicher Siloxaneinheiten

| | |
|---|---|
| (CH₃)₃-Si-O_{1/2} | 3,6 mol % |
| CH₃O(CH₃)₂-Si-O_{1/2} | 4,5 mol % |
| SiH(CH₃)-O_{2/2} | 0,0 mol % |
| Si(CH₃)(C₁₈H₃₇)-O_{2/2} | 58,4 mol % |
| Si(CH₃)(OCH₃)-O_{2/2} | 28,7 mol % |
| CH₃-Si-O_{3/2} | 4,8 mol % |

### Herstellungsbeispiel 5

106g eines Siloxan der Formel

(CH₃)₃-Si-O-[SiH(CH₃)-O]₄₇-[Si(CH₃)₂-O]₁₃-Si(CH₃)₃

und 0,18g Karstedt-Katalysator (1%Pt) wurden auf 80°C erhitzt. 67,3g Dodecen wurden innerhalb von 1h langsam zugegeben wobei die Temperatur auf 120°C anstieg. Nach abkühlen auf 75°C wurden innerhalb von 30 min 20g Ethanol zugegeben wobei ein starke Gas und Schaumentwicklung beobachtet wurde. Es wurde 2h bei 80°C nachgerührt. Anschließend wurden noch einmal 0,18g Katalysator und 40g Octen zugegeben und weitere 2h bei 80°C gerührt. Anschließend wurden flüchtige Bestandteile bei 100°C und 10 mbar am Rotationsverdampfer entfernt. Es wurde ein braunes Öl mit einer Viskosität von 2370 mPas erhalten.
Laut NMR-Analyse bestand das Produkt aus folgenden Anteilen unterschiedlicher Siloxaneinheiten:

| | |
|---|---|
| (CH₃)₃-Si-O_{1/2} | 2,2 mol % |
| SiH(CH₃)-O_{2/2} | 3,0 mol % |
| Si(CH₃)₂-O_{2/2} | 20,9 mol % |
| Si(CH₃)(C₁₂H₂₅)-O_{2/2} | 56,8 mol % |
| Si(CH₃)(C₈H₁₇)-O_{2/2} | 9,6 mol % |
| Si(CH₃) (OC₂H₅) -O_{2/2} | 7,5 mol % |

### Herstellungsbeispiel 6

50g eines Siloxan der Formel (CH₃)₃-Si-O-[Si(CH₃)H-O]₅₄-Si(CH₃)₃ und 0,18g Karstedt-Katalysator (1%Pt) wurden auf 80°C erhitzt. 50,53g Dodecen wurden innerhalb von 80 min langsam zugegeben wobei die Temperatur auf 110°C anstieg. Es wurde 2h bei 80°C nachgerührt. Nach Erhitzen auf 90°C wurden innerhalb von 30 min 32g n-Propanol zugegeben, wobei ein starke Gas- und Schaumentwicklung beobachtet wurde. Es wurde 2h bei 100°C nachgerührt. Es wurden noch einmal 0,18g Katalysator und 40g Octen zugegeben und weitere 2h bei 80°C gerührt. Anschließend wurden flüchtige Bestandteile bei 100°C und 10 mbar am Rotationsverdampfer entfernt. Es wurde ein bräunliches Öl mit einer Viskosität von 1320 mPas erhalten.
Laut NMR-Analyse bestand das Produkt aus folgenden Anteilen unterschiedlicher Siloxaneinheiten:

| | |
|---|---|
| (CH₃)₃-Si-O_{1/2} | 3,9 mol % |
| C₃H₇O(CH₃)₂-Si-O_{1/2} | 1,5 mol % |
| SiH(CH₃)-O_{2/2} | 0, 0 mol % |
| Si(CH₃)(C₁₂H₂₄)-O_{2/2} | + 51,6 mol % |
| Si(CH₃)(C₈H₁₇)-O_{2/2} | 7,1 mol% |
| Si(CH₃)(OC₃H₇)-O_{2/2} | 34,7 mol % |
| CH₃-Si-O_{3/2} | 1,2 mol % |

### Herstellungsbeispiel 7

17 g eines ethoxylierten Isotridecylalkohols mit einem HLB Wert von 13,7 (erhältlich unter dem Namen "LUTENSOL® TO 109" bei der BASF SE D-Ludwigshafen) und 15g Wasser wurden mit einem ULTRA-TURRAX® T50 beim 4000/min vermischt. 250g eines Produktes, das entsprechend Beispiel 3 hergestellt wurde, wurden bei 70°C aufgeschmolzen, langsam zugegeben und bei 6000/min homogenisiert. Es entstand eine feste Gelphase mit einer Fließgrenze von 4220 Pa. Diese Phase wurde mit 218 g Wasser, das als Konservierer 0,45g ACTICIDE® MV (erhältlich bei der Thor GmbH Speyer) enthielt, schrittweise verdünnt. Die Emulsion hatte eine Teilchengröße von 432 nm (D(50) Wert der Volumenverteilung) und zeigte nach 28d Lagerung bei 50°C keine Anzeichen einer Trennung.

### Anwendungsbeispiele 1-7

Von den Produkten der Herstellungsbeispiele 1-3 wird eine 4%ige Lösung in Isopropanol hergestellt. Der pH-Wert dieser Lösungen wird mit NaOH auf 9,0 eingestellt. Von den Produkten der Herstellungsbeispiele 4-6 wird eine 4%-ige Lösung in Toluol hergestellt. In diese Lösungen werden 0,02% Butyltitanat eingemischt.
Streifen von Popeline grau 65/35 PES/Co werden jeweils 2h in diese Lösungen getaucht, in einem Laborspannrahmen bei Raumtemperatur im Laborabzug vorgetrocknet und anschließend 10 min bei 150°C kondensiert.
Vom Produkt aus Herstellungsbeispiel 7 werden 10 Teile mit 990 Teilen vollentsalzten Wasser zu einer Flotte verdünnt. Der pH Wert dieser Flotte wird mit NaOH auf 9,0 eingestellt. Ein DIN A4 großes Stück von Popeline grau 65/35 PES/CO wird in diese Flotte getaucht. Der getränkte Stoff wird mit einem Zweiwalzenfoulard auf 70% Flottenaufnahme abgequetscht, aufgespannt und in einem Laborspannrahmen bei 150°C 10 Minuten getrocknet.
Die Hydrophobie wird nach 3 Tagen, nach 20 Tagen und nach einer 40°C Wäsche (Waschmaschine Typ Miele Softtronic W 1935; Programm Express 20; 1 kg Ballaststoff Baumwolle und Polyester) geprüft. Die Ergebnisse sind in Tabelle 1 zusammengefasst.

**Tabelle 1: Prüfergebnisse der Tests**

| **Herstellungs beispiel** | **Spraytest Note** | | |
|---|---|---|---|
| | **Nach 3d** | **Nach 20d** | **Nach 1x Waschen** |
| **1** | **80** | **90** | **70** |
| **2** | **70** | **70** | **50** |
| **3** | **100** | **100** | **100** |
| **4** | **100** | **100** | **90** |
| **5** | **100** | **100** | **90** |
| **6** | **100** | **100** | **90** |
| **7** | **90** | **100** | **80** |

Je höher der Wert in Tabelle 1 desto höher die Hydrophobie, d.h. desto besser die wasserabweisende Ausrüstung der Textilien. Die mit den erfindungsgemäßen Alkoxypolysiloxanen gemäß den Beispielen 1-7 behandelten Textilien zeigen eine gute bis sehr gute wasserabweisende Ausrüstung und auch eine gute bis sehr gute Waschpermanenz. Eine besonders gute wasserabweisende Ausrüstung und Waschpermanenz wird mit Alkoxypolysiloxan gemäß Beispiele 3-7 erzielt, d. h. mit einem Alkoxypolysiloxan gemäß Formel (II), das neben Siloxaneinheiten mit Alkoxygruppen auch Siloxaneinheiten mit längeren Alkylgruppen aufweist.

## Patentansprüche

1. Verfahren zur Imprägnierung von Textilien mit Zusammensetzungen enthaltend Alkoxypolysiloxane (A) der Formel
R¹₃SiO[SiR¹(OR²)O]ₓ[SiR¹₂O]_{y}[SiR¹R³O]_{z}SiR¹₃ (I)
wobei,
R¹ gleich oder verschieden ist und einen ggf. substituierten C₁-C₇-Kohlenwasserstoffrest bedeutet,
R² gleich oder verschieden ist und ein Wasserstoffatom oder einen C₁-C₆-Kohlenwasserstoffrest bedeutet,
R³ gleich oder verschieden ist und einen C₈-C₃₀-Kohlenwasserstoffrest bedeutet,
x eine ganze Zahl von mindestens 1, vorzugsweise mindestens 5, bevorzugt mindestens 10, und höchstens 1 000, vorzugsweise höchstens 100, bevorzugt höchstens 50, ist,
y eine ganze Zahl von mindestens 0 und höchstens 100, vorzugsweise höchstens 50, bevorzugt höchstens 10, ist,
z eine ganze Zahl von mindestens 0, vorzugsweise mindestens 5, bevorzugt mindestens 10, und höchstens 1 000, vorzugsweise höchstens 100, bevorzugt höchstens 50, ist,
mit der Maßgabe, dass
x Einheiten [SiR¹(OR²)O] in Mengen von mindestens 10 Mol-%, vorzugsweise mindestens 30 Mol-%, und höchstens 100 Mol-%, vorzugsweise höchstens 70 Mol-%,
y Einheiten [SiR¹₂O] in Mengen von mindestens 0 Mol-% und höchstens 90 Mol-%, vorzugsweise höchstens 50 Mol-%, und
z Einheiten [SiR¹R³O] in Mengen von mindestens 0 Mol-%, vorzugsweise mindestens 20 Mol-%, und höchstens 90 Mol-%, vorzugsweise höchstens 70 Mol-%,
jeweils bezogen auf die Summe der Siloxaneinheiten x+y+z, enthalten sind.

2. Verfahren nach Anspruch 1, **dadurch gekennzeichnet, dass** y den Wert 0 aufweist und z eine ganze Zahl von mindestens 1 ist.

3. Verfahren nach Anspruch 1 oder 2, **dadurch gekennzeichnet, dass** als Alkoxypolysiloxane solche der Formel
R¹₃SiO[SiR¹(OR²)O]_{x'}[SiR¹R³O]_{z'}SiR¹₃ (II)
eingesetzt werden, wobei R¹, R² und R³ die oben dafür angegebene Bedeutung haben,
x' eine ganze Zahl von mindestens 1, vorzugsweise mindestens 5, bevorzugt mindestens 10, und höchstens 1 000, vorzugsweise höchstens 100, bevorzugt höchstens 50, ist,
z' eine ganze Zahl von mindestens 1, vorzugsweise mindestens 5, bevorzugt mindestens 10, und höchstens 1 000, vorzugsweise höchstens 100, bevorzugt höchstens 50, ist,
mit der Maßgabe, dass
x' Einheiten [SiR¹(OR²)O] in Mengen von mindestens 10 Mol-%, vorzugsweise mindestens 20 Mol-%, bevorzugt mindestens 30 Mol-%, und höchstens 95 Mol-%, vorzugsweise höchstens 80 Mol-%, bevorzugt höchstens 70 Mol-%,
z¹ Einheiten [SiR¹R³O] in Mengen von mindestens 5 Mol-%, vorzugsweise mindestens 20 Mol-%, bevorzugt mindestens 30 Mol-%, und höchstens 90 Mol-%, vorzugsweise höchstens 80 Mol-%, bevorzugt höchstens 70 Mol-%,
jeweils bezogen auf die Summe der Siloxaneinheiten x'+z', enthalten sind.

4. Verfahren nach Anspruch 1, 2 oder 3, **dadurch gekennzeichnet, dass** R¹ einen C₁-C₄-Alkylrest oder einen Phenylrest bedeutet.

5. Verfahren nach einem der Ansprüche 1 bis 4, **dadurch gekennzeichnet, dass** als Zusammensetzungen Lösungen von Alkoxypolysiloxanen (A) gemäß einem der Ansprüche 1 bis 4 in organischen Lösungsmitteln eingesetzt werden.

6. Verfahren nach einem der Ansprüche 1 bis 5, **dadurch gekennzeichnet, dass** als Zusammensetzungen wässrige Emulsionen enthaltend
Alkoxypolysiloxane (A) gemäß einem der Ansprüche 1 bis 4, Emulgatoren (B) und
Wasser eingesetzt werden.

7. Verfahren nach einem der Ansprüche 1 bis 6, **dadurch gekennzeichnet, dass** die Zusammensetzungen auf die Textilien aufgebracht werden und die so behandelten Textilien bei Temperaturen von 25 bis 200°C trocknen gelassen werden.

8. Textilien, die nach dem Verfahren gemäß den Ansprüchen 1 bis 7 behandelt werden.

9. Zusammensetzungen enthaltend Alkoxypolysiloxane (A) der Formel
R¹₃SiO[SiR¹(OR²)O]_{x'}[SiR¹R³O]_{z'}SiR¹₃ (II)
R¹, R² und R³ die oben dafür angegebene Bedeutung haben,
x' eine ganze Zahl von mindestens 1, vorzugsweise mindestens 5, bevorzugt mindestens 10, und höchstens 1 000, vorzugsweise höchstens 100, bevorzugt höchstens 50, ist,
z' eine ganze Zahl von mindestens 1, vorzugsweise mindestens 5, bevorzugt mindestens 10, und höchstens 1 000, vorzugsweise höchstens 100, bevorzugt höchstens 50, ist,
mit der Maßgabe, dass
x' Einheiten [SiR¹(OR²)O] in Mengen von
mindestens 10 Mol-%, vorzugsweise mindestens 20 Mol-%, bevorzugt mindestens 30 Mol-%, und
höchstens 95 Mol-%, vorzugsweise höchstens 80 Mol-%, bevorzugt höchstens 70 Mol-%,
z' Einheiten [SiR¹R³O] in Mengen von
mindestens 5 Mol-%, vorzugsweise mindestens 20 Mol-%, bevorzugt mindestens .30 Mol-%, und
höchstens 90 Mol-%, vorzugsweise höchstens 80 Mol-%, bevorzugt höchstens 70 Mol-%,
jeweils bezogen auf die Summe der Siloxaneinheiten x'+z'.

10. Zusammensetzungen nach Anspruch 9, **dadurch gekennzeichnet, dass** R¹ einen C₁-C₄-Alkylrest oder einen Phenylrest bedeutet.

11. Zusammensetzungen nach Anspruch 9 oder 10, **dadurch gekennzeichnet, dass** die Zusammensetzungen Lösungen von Alkoxypolysiloxanen (A) gemäß Anspruch 9 oder 10 in organischen Lösungsmitteln sind.

12. Zusammensetzungen nach Anspruch 9, 10 oder 11, **dadurch gekennzeichnet, dass** die Zusammensetzungen wässrige Emulsionen sind, die
Alkoxypolysiloxane (A) gemäß Anspruch 9, 10 oder 11, Emulgatoren (B) und
Wasser (C) enthalten.

## Claims

1. Method for impregnating textiles with compositions comprising alkoxypolysiloxanes (A) of the formula
R¹₃SiO[SiR¹(OR²)O]ₓ[SiR¹₂O]_{y}[SiR¹R³O]_{z}SiR¹₃ (I)
where
R¹ at each occurrence is the same or different and represents an optionally substituted a C₁-C₇ hydrocarbon moiety,
R² at each occurrence is the same or different and represents a hydrogen atom or a C₁-C₆ hydrocarbon moiety,
R³ at each occurrence is the same or different and represents a C₈-C₃₀ hydrocarbon moiety,
x represents an integer of not less than 1, preferably not less than 5, more preferably not less than 10 and not more than 1 000, preferably not more than 100, more preferably not more than 50,
y represents an integer of not less than 0 and not more than 100, preferably not more than 50, more preferably not more than 10,
z represents an integer of not less than 0, preferably not less than 5, more preferably not less than 10, and not more than 1 000, preferably not more than 100, more preferably not more than 50,
with the proviso that there are present
x units [SiR¹(OR²)O] in amounts of not less than 10 mol%, preferably not less than 30 mol%, and not more than 100 mol%, preferably not more than 70 mol%,
y units [SiR¹₂O] in amounts of not less than 0 mol% and not more than 90 mol%, preferably not more than 50 mol%, and
z units [SiR¹R³O] in amounts of not less than 0 mol%, preferably not less than 20 mol%, and not more than 90 mol%, preferably not more than 70 mol%,
all based on the x+y+z sum total of siloxane units.

2. Method according to Claim 1, **characterized in that** y represents 0 and z represents an integer of not less than 1.

3. Method according to Claim 1 or 2, **characterized in that**, as alkoxypolysiloxanes, those of the formula
R¹₃SiO[SiR¹(OR²)O]_{x'}[SiR¹R³O]_{z'}SiR¹₃ (II)
are used, wherein
R¹, R² and R³ are each as defined above,
x' represents an integer of not less than 1, preferably not less than 5, more preferably not less than 10, and not more than 1 000, preferably not more than 100, more preferably not more than 50,
z' represents an integer of not less than 1, preferably not less than 5, more preferably not less than 10, and not more than 1 000, preferably not more than 100, more preferably not more than 50,
with the proviso that there are present
x' units [SiR¹(OR²)O] in amounts of not less than 10 mol%, preferably not less than 20 mol%, more preferably not less than 30 mol%, and
not more than 95 mol%, preferably not more than 80 mol%, more preferably not more than 70 mol%,
z' units [SiR¹R³O] in amounts of not less than 5 mol%, preferably not less than 20 mol%, more preferably not less than 30 mol%, and not more than 90 mol%, preferably not more than 80 mol%, more preferably not more than 70 mol%,
all based on the x'+z' sum total of siloxane units.

4. Method according to Claim 1, 2 or 3, **characterized in that** R¹ represents a C₁-C₄ alkyl moiety or a phenyl moiety.

5. Method according to any one of Claims 1 to 4, **characterized in that** compositions used are solutions of alkoxypolysiloxanes (A) as defined in any one of Claims 1 to 4 in organic solvents.

6. Method according to any one of Claims 1 to 5, **characterized in that** compositions used are aqueous emulsions comprising
alkoxypolysiloxanes (A) as defined in any one of Claims 1 to 4,
emulsifiers (B), and
water.

7. Method according to any one of Claims 1 to 6, **characterized in that** the compositions are applied to the textiles and the textiles thus treated are dried at temperatures of 25 to 200°C.

8. Textiles treated according to the method defined in Claims 1 to 7.

9. Compositions comprising alkoxypolysiloxanes (A) of the formula
R¹₃SiO[SiR¹(OR²)O]_{x'}[SiR¹R³O]_{z'}SiR¹₃ (II)
R¹, R² and R³ are each as defined above,
x' represents an integer of not less than 1, preferably not less than 5, more preferably not less than 10, and not more than 1 000, preferably not more than 100, more preferably not more than 50,
z' represents an integer of not less than 1, preferably not less than 5, more preferably not less than 10, and not more than 1 000, preferably not more than 100, more preferably not more than 50,
with the proviso that there are present
x' units [SiR¹(OR²)O] in amounts of not less than 10 mol%, preferably not less than 20 mol%, more preferably not less than 30 mol%, and
not more than 95 mol%, preferably not more than 80 mol%, more preferably not more than 70 mol%,
z' units [SiR¹R³O] in amounts of not less than 5 mol%, preferably not less than 20 mol%, more preferably not less than 30 mol%, and not more than 90 mol%, preferably not more than 80 mol%, more preferably not more than 70 mol%,
all based on the x'+z' sum total of siloxane units.

10. Compositions according to Claim 9, **characterized in that** R¹ represents a C₁-C₄ alkyl moiety or a phenyl moiety.

11. Compositions according to Claim 9 or 10, **characterized in that** the composition is a solution of an alkoxypolysiloxane (A) as defined in Claim 9 or 10 in an organic solvent.

12. Compositions according to Claim 9, 10 or 11, **characterized in that** the composition is an aqueous emulsion comprising an
alkoxypolysiloxane (A) as defined in Claim 9, 10 or 11,
an emulsifier (B), and
water (C).

## Revendications

1. Procédé d'imprégnation de textiles avec des compositions contenant des alcoxypolysiloxanes (A) de formule
R¹₃SiO[SiR¹(OR²)O]ₓ[SiR¹₂O]_{y}[SiR¹R³O]_{z}SiR¹₃ (I)
dans laquelle
les R¹ sont identiques ou différents, et signifient un radical hydrocarboné en C₁-C₇ éventuellement substitué, les R² sont identiques ou différents, et signifient un atome d'hydrogène ou un radical hydrocarboné en C₁-C₆, les R³ sont identiques ou différents, et signifient un radical hydrocarboné en C₈-C₃₀,
x signifie un nombre entier d'au moins 1, de préférence d'au moins 5, avantageusement d'au moins 10, et d'au plus 1 000, de préférence d'au plus 100, avantageusement d'au plus 50,
y signifie un nombre entier d'au moins 0 et d'au plus 100, de préférence d'au plus 50, avantageusement d'au plus 10,
z signifie un nombre entier d'au moins 0, de préférence d'au moins 5, avantageusement d'au moins 10, et d'au plus 1 000, de préférence d'au plus 100, avantageusement d'au plus 50,
à condition que
x unités [SiR¹(OR²)O] soient contenues en quantités d'au moins 10 % en moles, de préférence d'au moins 30 % en moles, et d'au plus 100 % en moles, de préférence d'au plus 70 % en moles,
y unités [SiR¹₂O] soient contenues en quantités d'au moins 0 % en moles et d'au plus 90 % en moles, de préférence d'au plus 50 % en moles, et
z unités [SiR¹R³O] soient contenues en quantités d'au moins 0 % en moles, de préférence d'au moins 20 % en moles, et d'au plus 90 % en moles, de préférence d'au plus 70 % en moles,
à chaque fois par rapport à la somme des unités siloxane x+y+z.

2. Procédé selon la revendication 1, **caractérisé en ce qu'**y présente la valeur 0 et z est un nombre entier d'au moins 1.

3. Procédé selon la revendication 1 ou 2, **caractérisé en ce qu'**en tant qu'alcoxypolysiloxanes, des alcoxypolysiloxanes de formule
R¹₃SiO[SiR¹(OR²)O]_{x'}[SiR¹R³O]_{z'}SiR¹₃ (II)
sont utilisés,
R¹, R² et R³ ayant la signification indiquée précédemment,
x' signifiant un nombre entier d'au moins 1, de préférence d'au moins 5, avantageusement d'au moins 10,
et d'au plus 1 000, de préférence d'au plus 100, avantageusement d'au plus 50,
z' signifiant un nombre entier d'au moins 1, de préférence d'au moins 5, avantageusement d'au moins 10,
et d'au plus 1 000, de préférence d'au plus 100, avantageusement d'au plus 50,
à condition que
x' unités [SiR¹(OR²)] soient contenues en quantités d'au moins 10 % en moles, de préférence d'au moins 20 % en moles, avantageusement d'au moins 30 % en moles, et d'au plus 95 % en moles, de préférence d'au plus 80 % en moles, avantageusement d'au plus 70 % en moles,
z' unités [SiR¹R³O] soient contenues en quantités d'au moins 5 % en moles, de préférence d'au moins 20 % en moles, avantageusement d'au moins 30 % en moles, et d'au plus 90 % en moles, de préférence d'au plus 80 % en moles, avantageusement d'au plus 70 % en moles,
à chaque fois par rapport à la somme des unités siloxane x'+z'.

4. Procédé selon la revendication 1, 2 ou 3, **caractérisé en ce que** R¹ signifie un radical alkyle en C₁-C₄ ou un radical phényle.

5. Procédé selon l'une quelconque des revendications 1 à 4, **caractérisé en ce que** des solutions d'alcoxypolysiloxanes (A) selon l'une quelconque des revendications 1 à 4 dans des solvants organiques sont utilisées en tant que compositions.

6. Procédé selon l'une quelconque des revendications 1 à 5, **caractérisé en ce que** des émulsions aqueuses contenant
des alcoxypolysiloxanes (A) selon l'une quelconque des revendications 1 à 4,
des émulsifiants (B) et
de l'eau
sont utilisées en tant que compositions.

7. Procédé selon l'une quelconque des revendications 1 à 6, **caractérisé en ce que** les compositions sont appliquées sur les textiles et les textiles ainsi traités sont laissés sécher à des températures de 25 à 200 °C.

8. Textiles, qui sont traités par le procédé selon les revendications 1 à 7.

9. Compositions contenant des alcoxypolysiloxanes (A) de formule
R¹₃SiO[SiR¹(OR²)O]_{x'}[SiR¹R³O]_{z'}SiR¹₃ (II)
R¹, R² et R³ ayant la signification indiquée précédemment,
x' signifiant un nombre entier d'au moins 1, de préférence d'au moins 5, avantageusement d'au moins 10, et d'au plus 1 000, de préférence d'au plus 100, avantageusement d'au plus 50,
z' signifiant un nombre entier d'au moins 1, de préférence d'au moins 5, avantageusement d'au moins 10, et d'au plus 1 000, de préférence d'au plus 100, avantageusement d'au plus 50,
à condition que
x' unités [SiR¹(OR²)O] soient contenues en quantités d'au moins 10 % en moles, de préférence d'au moins 20 % en moles, avantageusement d'au moins 30 % en moles, et d'au plus 95 % en moles, de préférence d'au plus 80 % en moles, avantageusement d'au plus 70 % en moles,
z' unités [SiR¹R³O] soient contenues en quantités d'au moins 5 % en moles, de préférence d'au moins 20 % en moles, avantageusement d'au moins 30 % en moles, et d'au plus 90 % en moles, de préférence d'au plus 80 % en moles, avantageusement d'au plus 70 % en moles,
à chaque fois par rapport à la somme des unités siloxane x'+z'.

10. Compositions selon la revendication 9, **caractérisées en ce que** R¹ signifie un radical alkyle en C₁-C₄ ou un radical phényle.

11. Compositions selon la revendication 9 ou 10, **caractérisées en ce que** les compositions sont des solutions d'alcoxypolysiloxanes (A) selon la revendication 9 ou 10 dans des solvants organiques.

12. Compositions selon la revendication 9, 10 ou 11, **caractérisées en ce que** les compositions sont des émulsions aqueuses qui contiennent
des alcoxypolysiloxanes (A) selon la revendication 9, 10 ou 11,
des émulsifiants (B) et
de l'eau (C).
